# EUROPÄISCHE PATENTSCHRIFT

(11) **EP 0 759 862 B1**
(45) Veröffentlichungstag und Bekanntmachung des Hinweises auf die Patenterteilung: **03.03.1999**
(21) Anmeldenummer: 95917896.3
(22) Anmeldetag: 11.05.1995
(51) Int. Cl.: B60S 1/08

(54) **SCHEIBENWISCHVORRICHTUNG**
WINDSCREEN WIPER DEVICE
SYSTEME D'ESSUIE-GLACE

(30) Priorität: 18.05.1994 DE 4417370
(43) Veröffentlichungstag der Anmeldung: 05.03.1997
(73) Patentinhaber: ROBERT BOSCH GMBH, 70442 Stuttgart (DE)
(72) Erfinder: KOCH, Stefan, D-77833 Ottersweier (DE)
(86) Internationale Anmeldenummer: DE9500623
(87) Internationale Veröffentlichungsnummer: WO9531361

(56) Entgegenhaltungen:
- FR-A- 2 541 639
- GB-A- 2 146 799
- US-A- 4 663 575
- US-A- 5 355 061
- PATENT ABSTRACTS OF JAPAN vol. 011 no. 098 (M-575) ,27.März 1987 & JP,A,61 247541 (NISSAN MOTOR CO LTD) 4.November 1986,
- PATENT ABSTRACTS OF JAPAN vol. 015 no. 298 (M-1141) ,29.Juli 1991 & JP,A,03 109153 (JIDOSHA DENKI KOGYO CO LTD) 9.Mai 1991,

## Beschreibung

### Stand der Technik

Die Erfindung geht aus von einer Scheibenwischvorrichtung nach der Gattung des Hauptanspruchs. Aus der DE-PS 29 44 224 ist eine gattungsgemäße Scheibenwischvorrichtung bekannt, die einen Elektromotor enthält, dessen Drehrichtung in den Endlagen eines Wischarms änderbar ist. Ein Pendelgetriebe, das aus einer Drehbewegung eine hin- und hergehende Bewegung bereitstellt, kann entfallen. Die bekannte Vorrichtung enthält eine Endstufe, die eine Umpolung der Elektromotorbetriebsspannung in den Endlagen vornimmt. Das Beaufschlagen des in den Endlagen zum Stillstand gekommenen Elektromotors mit der vollen Betriebsspannung führt zum Auftreten eines Anlaufstroms im Elektromotor, der ein Vielfaches über dem normalen Betriebsstrom liegt. Erfolgt das Umpolen des Elektromotors nach Erreichen der Endlage ohne einen Abbremsvorgang, der beispielsweise durch Kurzschließen des Elektromotors erreicht wird, kann der Anlaufstrom auf den doppelten Wert ansteigen, da sich zu der Spannung der Energiequelle noch die elektromotorische Gegenkraft des Elektromotors addiert.
Der Erfindung liegt die Aufgabe zugrunde, eine Scheibenwischvorrichtung anzugeben, die eine reduzierte Belastung des Elektromotors und der Endstufe aufweist.

Die Aufgabe wird durch die im Hauptanspruch angegebenen Merkmale gelöst.

### Vorteile der Erfindung

Die erfindungsgemäße Scheibenwischvorrichtung weist den Vorteil auf, daß insbesondere die thermische Belastung des Elektromotors und die der Endstufe während der Drehrichtungsänderung des Elektromotors im Bereich der Endlagen des Wischarms **durch Reduzierung der dem Elektromotor zur Verfügung gestellten elektrischen Leistung bei der Drehzahländerung** reduziert ist. **Erfindungsgemäß ist ein Zeitgeber vorgesehen, der von einem Endlagensignal gestartet wird, und wobei die Nennleistung des Elektromotors erst nach Ablauf der vom Zeitgeber vorgegebenen Zeit dem Elektromotor zur Verfügung gestellt wird.** Mit dieser Maßnahme wird das Auftreten eines hohen Anlaufstroms, der in Verbindung mit ohmschen Widerständen zu einer thermischen Belastung der Endstufe und des Motors führt, vermindert.

Vorteilhafte Weiterbildungen und Ausgestaltungen der erfindungsgemäßen Scheibenwischvorrichtung ergeben sich aus abhängigen Ansprüchen.

Eine andere Maßnahme sieht vor, daß die volle Leistung erst nach Erreichen einer vorgegebenen Position des Wischarms zugelassen wird. Die vorgegebene Position liegt innerhalb des Wischbereichs in der Nähe der zugehörigen Endlage. Erforderlich ist ein zusätzlicher Positionssensor, der beispielsweise als Schleifkontakt realisierbar ist, der mit einer Schleifscheibe zusammenwirkt.

(Weiter mit: 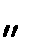 Eine geeignete Maßnahme, die für den Elektromotor zur Verfügung gestellte Leistung gegenüber der Nennleistung zu reduzieren, ist durch Reduzierung der bereitgestellten...")

Betriebsspannung möglich. Eine andere vorteilhafte Möglichkeit, die dem Elektromotor zur Verfügung gestellte elektrische Leistung gegenüber der Nennleistung zu reduzieren, sieht die Reduzierung des durch den Elektromotor fließenden Stroms vor. Insbesondere die Reduzierung des Stroms ist im Rahmen eines getakteten Betriebs mit besonders einfachen Mitteln möglich. Der getaktete Betrieb sieht vor, daß der Elektromotor an die volle zur Verfügung stehende Betriebsspannung geschaltet oder vollständig von ihr getrennt ist. Das Taktsignal kann eine variable Frequenz und/oder ein variables Tastverhältnis aufweisen. Sowohl die Frequenz als auch das Tastverhältnis können beispielsweise unter Berücksichtigung der Motordaten ausgewählt werden. Als ein weiteres Kriterium kann die unerwünschte Abstrahlung von elektromagnetischer Störstrahlung mitberücksichtigt werden.

Eine andere vorteilhafte Ausgestaltung der erfindungsgemäßen Vorrichtung sieht vor, daß der Elektromotor vor der Umpolung bei dem Erreichen der Endlage zunächst kurzgeschlossen wird. Mit dieser Maßnahme wird eine rasche Abbremsung des Motors erreicht, ein schneller Abbau der elektromotorischen Ggegenspannung und eine verminderte thermische Belastung des Motors.

Weitere vorteilhafte Weiterbildungen und Ausgestaltungen der erfindungsgemäßen Scheibenwischvorrichtung ergeben sich aus weiteren abhängigen Ansprüchen in Verbindung mit der folgenden Beschreibung.

### Zeichnung

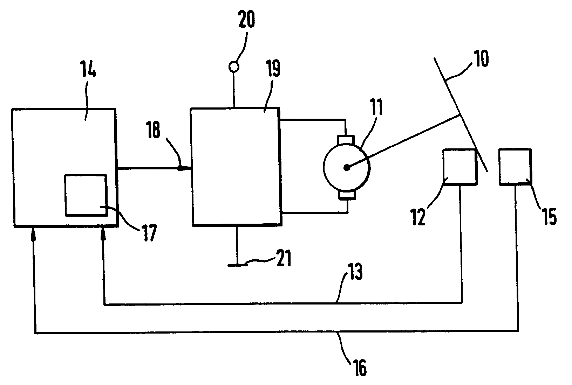

In der Figur ist ein Blockschaltbild einer erfindungsgemäßen Scheibenwischvorrichtung gezeigt.

Die Figur zeigt einen Wischarm 10, der auf einer nicht näher gezeigten Scheibe einer hin- und hergehende Bewegung ausführt. Der Wischarm 10 wird von einem Elektromotor 11 angetrieben. Ein Endlagensensor 12 stellt fest, wenn der Wischarm 10 die eine oder die andere Endlage erreicht und gibt daraufhin ein Endlagensignal 13 an eine Leistungsvorgabeanordnung 14 ab.

Die Leistungsvorgabeanordnung 14 erhält von einem Positionssensor 15 ein Positionssignal 16 zugeleitet, welches das Erreichen einer vorgegebenen Position des Wischarm 10 in der Nähe der Endlage anzeigt. Die Leistungsvorgabeanordnung 14 enthält einen Zeitgeber 17, der vom Endlagensignal 13 gestartet werden kann. Die Leistungsvorgabeanordnung 14 gibt ein Leistungsvorgabe- und Drehrichtungssignal 18 an eine Endstufe 19 ab, an die der Elektromotor 11 angeschlossen ist. Die Endstufe 19 ist an einem ersten Anschluß 20 und an einem zweiten Anschluß 21 einer nicht näher gezeigten Energiequelle angeschlossen.

Die erfindungsgemäße Scheibenwischvorrichtung arbeitet folgendermaßen:

Der Wischarm 10 macht auf einer nicht näher gezeigten Scheibe, deren Oberfläche zu reinigen ist, eine hin- und hergehende Bewegung. Die hin- und hergehende Bewegung wird durch Umpolen des Elektromotors 11 erreicht, der beispielsweise als permanentmagneterregter Gleichstrommotor oder als elektronisch kommutierter Wechselstrommotor realisiert ist.

Das Erreichen der Endlagen erfaßt der Endlagensensor 12. Der Endlagensensor 12 ist beispielsweise ein separater Sensor oder vorzugsweise eine mit dem Elektromotor 11 oder mit einem nicht gezeigten Antrieb gekoppelte, nicht näher dargestellte Steuerscheibe, die Schleifringe enthält.

Anstelle des Endlagensensors 12 kann ein Positionssensor vorgesehen sein, der ein Signal abgibt, das ein Maß für eine beliebige Position des Scheibenwischers 10 ist. Im Rahmen einer aufwendigeren Scheibenwischvorrichtung kann mit einem derartigen Positionssensor ein eingeschränkter Wischbetrieb realisiert werden, der auf einen reduzierten Wischbereich abgestellt ist. Das Endlagensignal 13 soll ebenfalls bei einem derart reduzierten Wischbetrieb auftreten und eine Drehrichtungsänderung des Elektromotors 11 veranlassen.

Nach dem Auftreten des Endlagensignals 13 kann zunächst ein Abbremsen des Elektromotors 11 vorgesehen sein. Ein wirkungsvolles Abbremsen des Elektromotors 11 erfolgt beispielsweise durch Kurzschließen der Motor-Versorgungsanschlüsse (Freilauf mit aktivem Bremsen des Motors). Das Kurzschließen des Elektromotors wird mit dem Leistungsvorgabe- und Drehrichtungssignal 18 veranlaßt, das die Endstufe 19 entsprechend steuert. Die Endstufe 19 enthält vorzugsweise eine Brückenschaltung, in deren Diagonale der Elektromotor 11 angeordnet ist. Ein Kurzschließen des Elektromotors 11 wird beispielsweise durch gleichzeitiges Einschalten entweder der beiden unteren oder der beiden oberen Brückenzweige erreicht. Die Drehrichtungsänderung des Elektromotors wird durch Umpolen der Betriebsspannung vorgenommen. Ein Anlegen der vollen umgepolten Betriebsspannung bevor der Motor abgebremst ist hätte einen stark erhöhten Anlaufstrom im Elektromotor 11 und in den eingeschalteten Brückenzweigen der Endstufe 19 zur Folge. Die entsprechend hohe thermische Belastung, die durch die unvermeidlichen ohmschen Verlustwiderstände auftritt, ist unerwünscht und kann im Extremfall zur Zerstörung einzelner Komponenten führen. Zumindest müßten die verwendeten Komponenten für eine vergleichsweise höhere Strombelastung und die zumindest kurzzeitige hohe thermische Belastung ausgelegt sein.

Erfindungsgemäß ist deshalb vorgesehen, daß die dem Elektromotor 11 zur Verfügung gestellte elektrische Leistung bei der Drehrichtungsänderung reduziert ist.

Gemäß dem ersten Ausführungsbeispiel ist vorgesehen, daß die Nennleistung erst nach Ablauf einer vorgegebenen Zeit dem Elektromotor 11 zur Verfügung gestellt wird. Die vorgegebene Zeit wird vom Zeitgeber 17 bereitgestellt, der vom Endlagensignal 13 gestartet wird. Während der laufenden Zeit wird vom Leistungsvorgabe- und Drehrichtungssignal 18 über die Endstufe 19 eine reduzierte Leistung für den Elektromotor 11 vorgegeben.

Gemäß dem anderen Ausführungsbeispiel ist vorgesehen, daß der Elektromotor die Nennleistung erst nach Erreichen einer vorgegebenen Position zur Verfügung gestellt bekommt. Ein Umpolen der Betriebsspannung sowie eine Reduzierung der Leistung wird beim Auftreten des Endlagensignals 13 unmittelbar veranlaßt. Erst wenn der Wischarm 10 die vom Positionssensor 15 festgelegte Position erreicht hat, gibt das Leistungsvorgabe- und Drehrichtungssignal 18 die volle Leistung für den Elektromotor 11 frei. Die vorgegebene Position, die der Positionssensor 15 festlegt, kann bei einer einfachen Ausführung der Scheibenwischvorrichtung eine fest vorgegebene Position sein, die in der Nähe der Endlage liegt. Bei der höherwertigen Ausführung der Scheibenwischvorrichtung, bei der anstelle des Endlagensensors ein Positionssensor vorgesehen ist, der ein Signal abgibt, das ein Maß für die aktuelle Position des Wischarms 10 auf der Scheibe ist, kann für die Endlage ein erster Positionswert und für die vorgegebene weitere Lage ein zweiter Positionswert vorgegeben werden. In diesem Fall entfällt der zusätzliche Positionssensor 15.

Gemäß einer vorteilhaften Ausgestaltung ist vorgesehen, daß das Leistungsvorgabe- und Drehrichtungssignal 18 die für den Elektromotor 11 vorgegebene Leistung, ausgehend von einem Startwert kontinuierlich bis zur vollen Leistung erhöht. Zur Durchführung dieser Aufgabe enthält die Leistungsvorgabeanordnung 14 einen Signalgenerator, dessen Signal den Verlauf des Anstiegs der vorgegebenen Leistung festlegt.

Die Leistungsvorgabe für den Elektromotor 11 erfolgt in der Endstufe 19. Es ist möglich, entweder die Spannung oder den Strom oder beide Größen gleichzeitig gegenüber dem Nennbetrieb zu reduzieren. Besonders geeignet ist die Reduzierung des durch den Elektromotor 11 fließenden Stroms. Eine Reduzierung des Stroms ist insbesondere leicht realisierbar durch den Einsatz eines getakteten Betriebs, bei dem der Elektromotor 11 im zeitlichen Wechsel entweder an die volle Betriebsspannung angeschlossen oder abgeschaltet wird. Die Taktfrequenz und das Tastverhältnis können variabel sein. Beide Größen, insbesondere die Frequenz kann in Abhängigkeit von den Motordaten festgelegt werden. Eine untere Grenze für die Einschaltdauer ist dadurch gegeben, daß der durch den Elektromotor 11 fließende Strom nur auf einen maximal vorgegebenen Wert während eines Einschaltimpulses ansteigen darf. Die Anstiegszeit ist im wesentlichen durch die Induktivität der Motorwicklung bestimmt. Eine obere Grenze für die Frequenz wird dadurch festgelegt sein, daß ein bestimmtes Maß an abgestrahlter hochfrequenter Energie nicht überschritten werden sollte. Durch Veränderung des Tastverhältnisses, beispielsweise bei fest vorgegebener Frequenz, ist die kontinuierliche Erhöhung der Leistung ohne zusätzlichen Aufwand realisierbar.

Die Reduzierung der dem Elektromotor 11 zur Verfügung gestellten Spannung weist den Vorteil einer hohen elektromagnetischen Verträglichkeit auf, da Schaltimpulse mit entsprechend hohen Spektralanteilen nicht vorhanden sind.

Die erfindungsgemäße Scheibenwischvorrichtung ist insbesondere geeignet zur Verwendung in Kraftfahrzeugen. Der in der Figur eingetragene Elektromotor 11 kann sowohl einen als auch gleichzeitig mehrere Wischarme 10 antreiben. In einem Kraftfahrzeug können mehrere Elektromotoren 11 vorgesehen sein, die separat jeweils Wischarme 10 antreiben.

## Patentansprüche

1. Scheibenwischvorrichtung mit wenigstens einem Wischarm, der von einem Elektromotor (11) angetrieben ist, dessen Drehrichtung zumindest in den Endlagen änderbar ist, wobei die dem Elektromotor (11) zur Verfügung gestellte elektrische Leistung bei der Drehzahländerung reduziert ist, dadurch gekennzeichnet, daß ein Zeitgeber (17) vorgesehen ist, der von einem Endlagensignal (13) gestartet wird, und daß die Nennleistung des Elektromotors (11) erst nach Ablauf der vom Zeitgeber (17) vorgegebenen Zeit dem Elektromotor (11) zur Verfügung gestellt wird.

2. Scheibenwischvorrichtung nach Anspruch 1, dadurch gekennzeichnet, daß vor der Drehrichtungsänderung ein Kurzschließen des Elektromotors (11) vorgesehen ist.

3. Scheibenwischvorrichtung nach Anspruch 1, dadurch gekennzeichnet, daß eine Reduzierung der Spannung gegenüber der Nennspannung vorgesehen ist.

4. Scheibenwischvorrichtung nach Anspruch 1, dadurch gekennzeichnet, daß ein reduzierter Strom gegenüber dem Nennstrom vorgesehen ist.

5. Scheibenwischvorrichtung nach Anspruch 4, dadurch gekennzeichnet, daß der reduzierte Strom mit einem getakteten Betrieb vorgegeben ist, bei dem der Elektromotor (11) in zeitlichem Wechsel an eine Energiequelle geschaltet oder abgeschaltet ist.

6. Scheibenwischvorrichtung nach Anspruch 1, dadurch gekennzeichnet, daß eine kontinuierliche Leistungserhöhung vorgesehen ist.

7. Scheibenwischvorrichtung nach Anspruch 1, gekennzeichnet durch die Verwendung in einem Kraftfahrzeug.

## Claims

1. Wiper device having at least one wiper arm, which is driven by an electric motor (11), whose direction of rotation can be changed, at least in the end positions, electric power made available to the electric motor (11) being reduced during the change in speed, characterized in that a time generator (17) is provided which is started by an end position signal (13), and in that the nominal power of the electric motor (11) is made available to the electric motor (11) only after expiry of the time prescribed by the time generator (17).

2. Wiper device according to Claim 1, characterized in that short-circuiting of the electric motor (11) is provided before the change of the direction of rotation.

3. Wiper device according to Claim 1, characterized in that a reduction in the voltage is provided with respect to the nominal voltage.

4. Wiper device according to Claim 1, characterized in that a reduced current is provided with respect to the nominal current.

5. Wiper device according to Claim 4, characterized in that the reduced current is provided with a clocked operation in which the electric motor (11) is connected or disconnected to an energy source in temporal operation.

6. Wiper device according to Claim 1, characterized in that a continuous increase in power is provided.

7. Wiper device according to Claim 1, characterized by use in a motor vehicle.

## Revendications

1. Dispositif d'essuie-glace comprenant au moins un bras entraîné par un moteur électrique (11) dont le sens de rotation change au moins en position de fin de course, la puissance électrique fournie au moteur électrique (11) étant réduite par variation de vitesse de rotation,
caractérisé en ce qu'
il comporte une horloge (17) démarrée par un signal de fin de course (13) et la puissance nominale du moteur électrique (12) n'est fournie au moteur électrique (11) qu'à la fin d'un temps prédéterminé par l'horloge (17).

2. Dispositif d'essuie-glace selon la revendication 1,
caractérisé par
la mise en court-circuit du moteur électrique (11) avant le changement de sens de rotation.

3. Dispositif d'essuie-glace selon la revendication 1,
caractérisé par
une réduction de la tension par rapport à la tension nominale.

4. Dispositif d'essuie-glace selon la revendication 1,
caractérisé par
un courant réduit par rapport au courant nominal.

5. Dispositif d'essuie-glace selon la revendication 4,
caractérisé en ce que
le courant réduit est prédéterminé pour fonctionner à une certaine cadence à laquelle le moteur électrique (11) est branché ou coupé selon une alternance de temps rapide au niveau de la source d'énergie.

6. Dispositif d'essuie-glace selon la revendication 1,
caractérisé par
une augmentation continue de la puissance.

7. Dispositif d'essuie-glace selon la revendication 1,
caractérisé par
son application à un véhicule automobile.
